# EUROPEAN PATENT APPLICATION

(11) **EP 0 757 457 A2**
(43) Date of publication of application: **05.02.1997**
(21) Application number: 96850141.1
(22) Date of filing: 31.07.1996
(51) Int. Cl.: H04L 5/14

(54) **Transcoder module for fixed wireless networking**

(30) Priority: 31.07.1995 US 508432
(71) Applicant: HE HOLDINGS, INC. dba HUGHES ELECTRONICS, Los Angeles, CA 90045-0066 (US)
(72) Inventor: Jangi, Shrirang, Germantown, Maryland 20874 (US)
(74) Representative: Karlsson, Leif Karl Gunnar

(57) **Abstract**

A method and device for transmitting and receiving data between a multiscriber transcoder module and a base unit in a wireless communication system. A telephone subscriber interface connects multiple digital channels to a pulse code modulation bus, and subsequently to a pulse code modulation highway controller. The controller multiplexes the digital channels onto a time division multiplexed bus, shared by a plurality of digital signal processors. The processors transmit data on the bus on a cycled basis, each processor having full mastership of the bus. The processors perform compression, decompression, voice detection and dual tone multifrequency detection, among other tasks.

## Description

### BACKGROUND OF THE INVENTION

In fixed or other wireless networking systems, a conventional transcoder module architecture provides for the processing and transmission of digital speech from a telephone subscriber to a base station unit and vice versa. In a subscriber to base station unit transmission system, a digital telephone subscriber interface typically connects a bank of telephones to a transcoder module where digital speech data is compressed for transmission over the air to a base station unit. Ordinarily, each subscriber telephone will have corresponding analog-to-digital (A/D) converters which implement a commonly used coding technique known as pulse code modulation. As is well known in the art, when an individual speaks into the transmitter end of a telephone, an analog representation of the person's speech is created. In a digital telephone, an A/D converter converts the analog speech data signal to a digital speech representation in analog form.

Pulse code modulation is generally used to format digital speech data for transmission onto a pulse code modulation bus. For pulse code modulation, an analog signal is sampled by an A/D converter. Each sample point is then represented by a digital number which most closely corresponds to the signal voltage. Ordinarily, a voice signal is sampled 8000 times per second (8 Khz) with the signal coded into 256 segments (8 bit representation). This results in a transmission rate of 64 Kb/sec which must be compressed by a transcoder to fit within an economical spectrum for transmission.

Reducing the transmission data rate to a more practical rate for digital speech transmission requires sophisticated transcoders. A transcoder analyzes speech signals to identify characteristics of the speech.

After compression by a transcoder, compressed speech packets are subsequently transmitted over the air to a base station unit, where the speech packets may be transmitted to another remote base station unit or decompressed and transmitted to a local telephone subscriber.

Similar parallel processing mechanics take place when speech data is transmitted from a base station unit to a subscriber unit. The primary difference being that the transcoder module must "decompress" speech packets received from a base station unit.

In a conventional digital telephone, a transcoder module within the phone will typically consist, at minimum, of digital signal processing components for speech compression and decompression, echo cancellation, voice activity detection, and dual tone multifrequency digit detection. Ordinarily, only one digital channel can be supported per digital phone. Thus, if six channels must be supported, six phones with the requisite digital hardware components would ordinarily be necessary.

For the above described system, as with most electronics, there is a premium on low cost and reduced hardware requirements without a corresponding drop-off in system performance. Accordingly, it is a primary object of this invention to provide an improved wireless networking system wherein the cost of supporting multiple digital telephone subscribers is greatly reduced while maintaining system performance. It is another object of the invention to provide such a system wherein desired economies can be achieved without diminishing various performance characteristics such as data transmission rates.

### SUMMARY OF THE INVENTION

The foregoing objects, along with other features and advantages, are achieved in a transcoder architecture that supports multiple subscribers in a system where necessary functional components are shared among each subscriber. Thus, a single transcoder module can support six active subscriber channels through implementation of a time division multiplexed serial bus shared among several digital signal processors. The functions shared by subscribers and supported by the multiple subscriber transcoder module include: speech compression (64 Kb/sec to 5Kb/sec) and decompression (5 Kb/sec to 64Kb/sec); echo cancellation; voice activity detection; dual tone multifrequency digit detection; and telephonic tone generation. Because the time division multiplexed bus allows the components performing these functions to be shared by multiple subscribers without additional hardware, the number and complexity of circuit components in the overall system are reduced.

More particularly, the methods and apparatus of the present invention provide eight digital signal processors communicating on a shared time division multiplexed serial bus. Six of the digital signal processors perform compression and decompression of digital speech data for an associated subscriber channel. When transmitting from a subscriber unit to a base station unit, the digital signal processors compress 320 bytes of digital speech into 200 bits of encoded speech packets for each 40 millisecond duration that speech is sampled. This results in a data transmission rate of 5 kb/sec. Alternatively, when transmitting from a base station unit to a subscriber unit, the digital signal processors decompress 200 bits of compressed speech packets into 320 bytes of decoded full bandwidth pulse code modulation data for each 40 millisecond duration that speech is sampled. This results in a data transmission rate of 64 Kb/sec.

Another digital signal processor is preferable to buffer data received from and transmitted to the subscriber telephones. This same digital signal processor also cancels echoes produced at the subscriber telephones, and produces required telephonic tones. Yet another digital signal processor performs voice detection as well as detection of dual tone multifrequency tones on data it receives from the aforementioned buffering digital signal processor. This digital signal processor also searches and detects the presence of compressed speech packets transmitted from a base station unit to a subscriber unit.

The method of the present invention supports multiple subscribers without the high cost associated with known multiple subscriber applications. The present invention reduces the number of components necessary to operate a multiple subscriber unit by multiplexing the active subscriber channels onto a single serial bus. This results in multiplexed digital channels sharing the eight digital signal processing components.

The speed of transmission of data on the bus between the various digital signal processors is enhanced by the time division multiplexed method of the present invention. The present invention provides for each digital signal processor to have full mastership of the time division multiplexed bus for a predetermined period based upon a real-time clocking signal. Accordingly, all time division multiplexed slots are allocated to the currently transmitting digital signal processor. Each digital signal processor is given an opportunity to have mastership of the time division multiplexed bus in round-robin fashion. Accordingly, reduced duration for each transmission as well as lower communication overhead is achieved.

### BRIEF DESCRIPTION OF THE DRAWINGS

The invention, together with further objects and attendant advantages, will best be understood by reference to the following detailed description, taken in conjunction with the accompanying drawings wherein:
Figure 1 is a block diagram of a transcoder module in a fixed wireless networking system according to a preferred embodiment of the invention.
Figure 2 is a block diagram of a serial multiprocessor bus according to a preferred embodiment of the invention.
Figure 3 is a diagram illustrating the time division multiplexed method implemented in transmitting data on the serial multiprocessor bus according to a preferred embodiment of the invention.

### DETAILED DESCRIPTION OF A PREFERRED EMBODIMENT

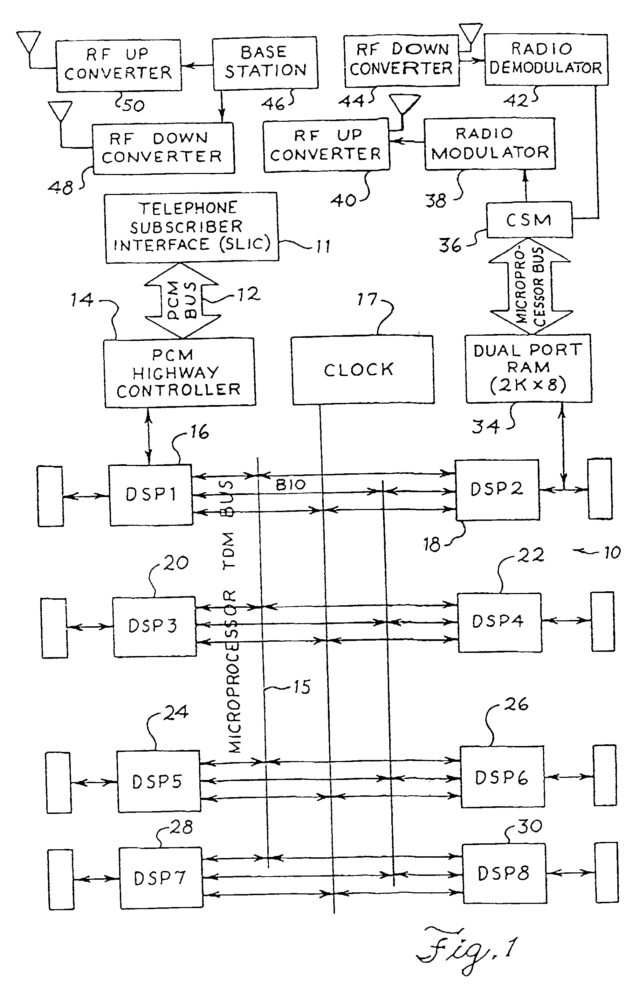

Figure 1 is a block diagram of a transcoder module 10 embodying the present invention. In the transmitting mode, a telephone subscriber interface 10 modulates digital data over the air to a base station unit 46 through the transcoder module 8. It will be understood herein that the term "digital data" includes speech data, tone data, pulse code modulation data, compressed data, decompressed data or any other type of data represented in digital form. The telephone subscriber interface 11 represents a bank of subscriber telephones where each telephone has corresponding A/D converters with pulse code modulation circuitry. As is well known in the art, when an individual speaks into the transmitting end of a subscriber telephone, an analog representation of the individual's voice is created. Pulse code modulation circuitry samples the analog speech data at 8 Khz for a 64 Kb/sec data transmission rate. The resulting digital speech data is compressed and transmitted over a pulse code modulation bus 12 to a pulse code modulator highway controller 14.

In the multiple telephone subscriber architecture of the present invention, six active digital channels are supported. The pulse code modulator highway controller 14 multiplexes the six digital channels and transmits the digital speech data to DSP1 16 (a digital signal processor) which stores samples of the data and acts as a selective buffering device. DSP1 16 is connected to seven other digital signal processors on a time division multiplexed bus 15 as shown in Figure 1.

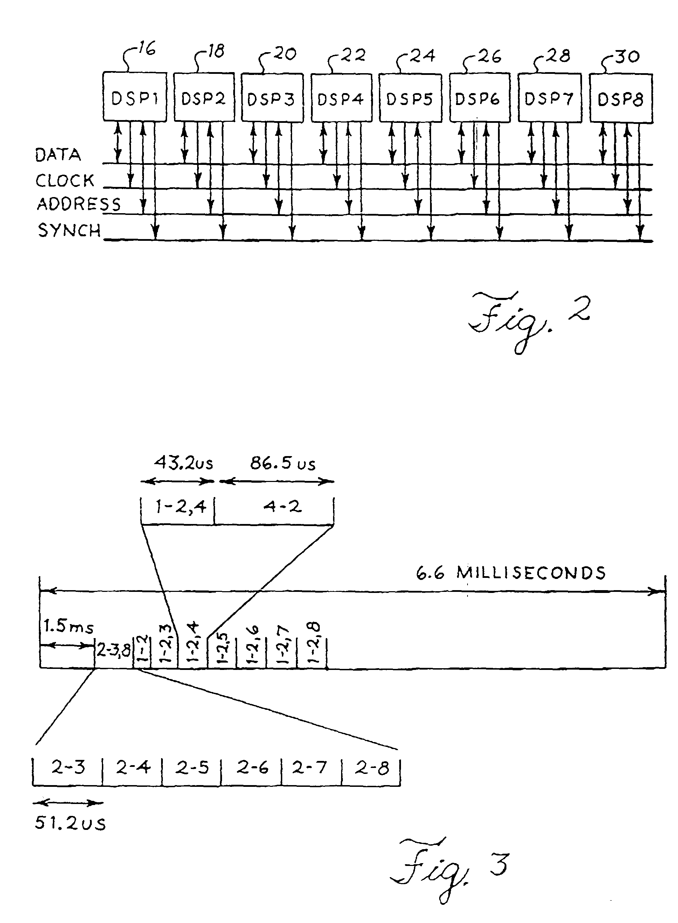

Referring to Figure 2, each digital signal processor on the bus is controlled by a clock 17 operating on a 6.6 millisecond cycle. The order and time at which each digital signal processor assumes full mastership of the time division multiplexed bus 15 is predetermined based on the real-time clocking signal. In a conventional time division multiplexed scheme, with eight processors sharing the time division multiplexed bus, the bandwidth of the bus is divided into eight slots, with each processor gaining mastership of the bus for its assigned slot. This effectively makes only 1/8 of the total bandwidth available to the transmitting processor, resulting in a low transmission rate due to the limited information that may be transmitted on the narrow bandwidth. In the method of the present invention, each digital signal processor receives full mastership of the time division multiplexed bus 15. Therefore, each time division multiplexed slot is allocated to the transmitting digital signal processor. When the transmitting digital signal processor finishes transmitting data, it indicates that the next predetermined digital signal processor may begin transmitting. This cycle repeats itself every 6.6 milliseconds as determined by the clock 17.

Figure 3 illustrates the inter-digital signal processing communication activity that may occur in a given time division multiplexed slot. In Figure 3, there is no digital data transmission for the first 1.5 milliseconds of the 6.6 millisecond slot shown. Subsequent to that period, different digital signal processors take control of the bus as shown in Figure 3. Because all time division multiplexed slots are allocated to each digital signal processor in turn, there is a reduction in duration for each transmission and shorter waiting periods between each transmission.

Referring again to Figure 1, the digital speech data buffered in DSP1 16 will be checked for echos and transmitted onto the time division multiplexed bus 15 when it is DSP1's 16 turn to transmit. Analog subscriber telephone instruments tend to reflect part of the speech energy transmitted towards a subscriber back along with the subscriber's speech data. This type of echo in the digital speech signal is undesirable and becomes irritatingly audible in digital wireless systems which have long speech path delays due to speech coding. Accordingly, DSPI 16 performs echo cancellation on speech received from a subscriber before sending it over the time division multiplexed bus 15 to appropriate processors for speech compression and other further processing. In general, DSPI 16 detects echoes by comparing the transmitted signal to the signal reflected back from the subscriber.

The digital speech data is transmitted from DSP1 16 to DSP2 18 and to the corresponding compression digital signal processor designated for the particular channel, i.e. DSP3 20, DSP4 22, DSP5 24, DSP6 26, DSP7 28, and DSP8 30. The digital signal processor associated with the channel compresses the digital speech data into compressed speech packets and sends the packets to DSP2 18. Subsequently, DSP2 18 performs voice activity detection as well as detection of dual tone multifrequency tones on the digital data received from DSP1 16.

If DSP2 18 detects the presence of voice data, the corresponding compressed speech packets received from the associated compression digital signal processor are transmitted to a dual port ram device 34. The dual port ram device 34 acts as a data exchange buffer between the transcoder module 8 and a control switching module 36. The control switching module 36 is a high level controller that takes digital data from the transcoder module 8 and transmits the data to a radio modulator 38 for transmission over the air via an RF up converter 40 on a designated RF channel to the RF down converter 48 of a base station unit 46. The control switching module 36 also allocates appropriate frequencies for communicating with the base station unit 46.

DSP2 18 also searches for the presence of dual tone multifrequency signals in the data received from DSPI 16. These tones are present whenever a number or symbol is pressed on a subscriber telephone key pad. Each number or symbol is represented by a particular pair of frequencies, hence the name "dual tone." Special coding is necessary for dual tone multifrequency tones to distinguish the tones from voice data. If DSP2 18 detects the presence of a dual tone multifrequency signal, it replaces the compressed speech packets with specially encoded dual tone multifrequency packets to be sent over the air to the base station unit 46.

In the embodiment of Figure 1, whereby the compressed data is transmitted over the air, each radio channel may use the E-TDMA4® protocol described in U.S. Patent No. 5,299,198, filed on December 6, 1990, which is incorporated herein by reference. In this system, each channel has six time slots, each capable of carrying the output of a speech coder, or providing input to a speech synthesizer.

In the receiving mode, a base station unit 46 modulates compressed speech packets over the air via an RF up converter 50 to the RF down converter 44 of the multiscriber transcoder unit. The control switching module 36 takes the compressed speech packets and transmits the packets to the dual port ram 34 device, which acts as a data exchange buffer between the base station unit 46 and the control switching module 36.

DSP2 18 searches for the presence of compressed speech packets received from the base station unit 46. When DSP2 18 receives these packets they are sent to the corresponding decompression digital signal processor, i.e. DSP3 20, DSP4 22, DSP5 24, DSP6 26, DSP7 28, and DSP8 30. The decompression digital signal processor decompresses the packets into pulse code modulation data and sends it to DSP1 16. DSP1 16 transmits the pulse code modulation data to the telephone subscriber interface 10 where a D/A converter samples the data at 8 Khz and reconstructs an analog speech signal.

If the control switching module 36 commands the transcoder module 8 to generate a specific tone, a tone command is received by DSP2 18 and transmitted to DSP2 18. DSP1 16 then replaces the pulse code modulation data from the decompression digital signal processor with a synthetic tone data signal corresponding to the required tone for the required duration.

In an exemplary operation of the present invention where the transcoder module 8 is transmitting digital speech data to a base station unit 46, there typically exists six telephones connected to a telephone subscriber interface 10. Each telephone has corresponding A/D converters with pulse code modulator circuitry. An analog speech signal is sampled at 8 Khz resulting in a 64 Kb/sec data transmission rate. The digitized speech data is transmitted on a pulse code modulation bus 12 to a pulse code modulator highway controller 14 that multiplexes the digitized speech data onto an intermediary bus 15 linked to DSP1 16. DSPI 16 buffers incoming pulse code modulated speech data from multiple subscribers and demultiplexes the data into speech buffers corresponding to individual subscribers or channels. The buffered data is treated for removing echo signals. This echo cancelled data is then transmitted to DSP2 18 for dual tone multifrequency and voice-activity detection. Simultaneously, the data is also sent to DSPs 3-8 for compressing the speech from the subscribers. As shown in Figure 3, the transmission to DSP2 18 and DSP3 20, DSP4 22, DSP5 24, DSP6 26, DSP7 28, and DSP8 30, is achieved in broadcast fashion over the time division multiplexed bus 15.

Each time division multiplexed slot is allocated to the currently transmitting digital signal processor. When the transmitting digital signal processor finishes transmitting data, it sends a signal onto the time division multiplexed bus 15 indicating that the next predetermined digital signal processor may begin transmitting on the time division multiplexed bus 15. This cycle repeats itself every 6.6 milliseconds as determined by a clock 17, with each digital signal processor receiving an opportunity to transmit data. When the digital speech data reaches the time division multiplexed bus 15, one of the compression digital signal processors will compress 320 bytes of digitized speech into 200 bits of encoded compressed speech packets for every 40 millisecond data stream.

Alternatively, the transcoder module digital signal processors decompress 200 bits of digitized speech into 320 bytes of pulse code modulation data after receiving compressed speech packets from a base station unit 46. A decompression digital signal processor transmits the digital speech data to the telephone subscriber interface 11 where a digital-to-analog converter samples the data at 8 Khz and reconstructs an analog speech signal.

Additional advantages and modifications will readily occur to those skilled in the art. The invention, in its broader aspects, is therefore not limited to the specific details, representative apparatus, and illustrative examples shown and described. Various modifications and variation can be made to the present invention without varying from the scope or spirit of the invention, and it is intended that the present invention cover the modifications and variations provided they come within the scope of the appended claims and their equivalents.

## Claims

1. In a wireless networking system, a method for transmitting digital data from a telephone subscriber interface (11) to a base station unit (46), comprising the steps of:
multiplexing said digital data;
transmitting said digital data to a first digital signal processor (16);
transmitting said digital data exclusively from said first digital signal processor (16) onto a time division multiplexed bus (15) having time division multiplexed slots, and allocating all said time division multiplexed slots to said first digital signal processor (16) during said transmitting;
compressing said digital data; and
transmitting said digital data to said base station unit (46),
whereby the transmission of said digital data on said time division multiplexed bus (15) optimizes the speed of transmission of said digital data from said telephone subscriber interface (11) to said base station unit (46).

2. The method of claim 1 further comprising the step of canceling an echo in said digital data.

3. The method of claim 1 further comprising the step of detecting a dual tone multifrequency signal in said digital data signal.

4. The method of claim 3 further comprising the step of creating a dual tone multifrequency packet responsive to said detecting of said dual tone multifrequency signal.

5. The method of claim 1 further comprising the step of transmitting said digital data exclusively from a second digital signal processor (20) onto said time division multiplexed bus (15) having said time division multiplexed slots, and allocating all said time division multiplexed slots to said second digital signal processor (20) during said transmitting, after said transmitting of said digital data exclusively from said first digital signal processor (16).

6. The method of claim 5 further comprising the step of transmitting said digital data exclusively from said first digital signal processor (16) onto said time division multiplexed bus (15) having said time division multiplexed slots, and allocating all said time division multiplexed slots to said first digital signal processor (16) during said transmitting, after said transmitting of said digital data exclusively from said second digital signal processor (20).

7. The method of claim 6 further comprising the step of timing and ordering said transmitting of said first digital signal processor (16) and said transmitting of said second digital signal processor (20) in a manner responsive to a real-time clocking signal.

8. In a wireless networking system, having a telephone subscriber interface (11), a control switching module (36) and a base station unit (46), a transcoder module (10) device for transmitting digital data to a base station unit (46), said transcoder module (10) device comprising:
a pulse code modulation highway controller (14) for multiplexing said digital data received from said telephone subscriber interface (11);
a time division multiplexed bus (15) for receiving said digital data from said pulse code modulation highway controller (14);
a first digital signal processor (16) for buffering said digital data received from said pulse code modulation highway controller (14);
a second digital signal processor (20) for compressing said digital data; and
a third digital signal processor (18) for transmitting said digital data to said base station unit (46),
whereby the transmission of said digital data on said time division multiplexed bus (15) optimizes the speed of transmission of said digital data from said telephone subscriber interface (11) to said base station unit (46).

9. In a wireless networking system, having a telephone subscriber interface (11), a method of receiving digital data from a base station unit (46), comprising the steps of:
detecting said digital data received from said base station unit (46);
transmitting said digital data exclusively from a first digital signal processor (18) onto a time division multiplexed bus (15) having time division multiplexed slots, and allocating all said time division multiplexed slots to said first digital signal processor (18) during said transmitting;
decompressing said digital data;
transmitting said digital data to said telephone subscriber interface (11),
whereby the transmission of said digital data on said time division multiplexed bus (15) optimizes the transmission of said digital data from said base station unit (46) to said telephone subscriber interface (11).

10. In a wireless networking system, having a telephone subscriber interface (11), a control switching module (36), a base station unit (46), and a transcoder module (10) device for receiving digital data from the base station unit (46), said transcoder module (10) device comprising:
a first digital signal processor (18) for transmitting said digital data;
a time division multiplexed bus (15) for receiving said digital data from said first digital signal processor (18);
a second digital signal processor (22) for decompressing said digital data; and
a third digital signal processor (16) for transmitting said digital data to telephone subscriber interface (11),
whereby the transmission of said digital data on said time division multiplexed bus (15) optimizes the transmission of said digital data from said base station unit (46) to said telephone subscriber interface (11).
